# EUROPÄISCHE PATENTSCHRIFT

(11) **EP 1 349 735 B1**
(45) Veröffentlichungstag und Bekanntmachung des Hinweises auf die Patenterteilung: **06.04.2005**
(21) Anmeldenummer: 01988066.5
(22) Anmeldetag: 21.12.2001
(51) Int. Cl.: B60B 7/00

(54) **ABDECKSCHEIBE FÜR EIN FAHRZEUG-RAD**
WHEEL CAP FOR A VEHICLE WHEEL
ENJOLIVEUR D'UNE ROUE DE VEHICULE

(30) Priorität: 11.01.2001 DE 10100899
(43) Veröffentlichungstag der Anmeldung: 08.10.2003
(73) Patentinhaber: Bayerische Motoren Werke Aktiengesellschaft, 80809 München (DE)
(72) Erfinder: HARTL, Robert, 85368 Moosburg (DE); LINDNER, Ulrich, 71067 Sindelfingen (DE)
(74) Vertreter: Schmidt, Günter, Dipl.-Ing.
(86) Internationale Anmeldenummer: PCT/EP2001/015244
(87) Internationale Veröffentlichungsnummer: WO 2002/055321

(56) Entgegenhaltungen:
- US-A- 5 205 615
- US-A- 5 639 146

## Beschreibung

Die Erfindung betrifft eine Abdeckscheibe für ein Fahrzeug-Rad mit einer Haltevorrichtung, die durch seitliches Andrücken der geeignet positionierten Abdeckscheibe aktiviert wird und somit die Abdeckscheibe am Radkörper fixiert. Zum technischen Umfeld wird beispielshalber auf die EP-0 310 777 A1 oder auf die DE-OS 27 45 072 verwiesen.

Grundsätzlich sind eine Vielzahl von Ausbildungen für Rad-Abdeckscheiben von Fahrzeugen, insbesondere Personenkraftwagen, bekannt. Diese Abdeckscheiben sollen dabei relativ einfach auf den Rädern zu befestigen und - für einen fälligen Radwechsel - ebenso einfach von den Rädern abnehmbar sein, wobei jedoch im üblichen Fahrbetrieb die Abdeckscheibe sicher und unverlierbar am Fzg-Rad gehalten sein soll. Die am weitesten verbreitete Befestigungsart ist dabei eine Clipsverbindung mit zumeist mehreren Haltezungen, die Haltenasen aufweisen, welche eine Rastschulter oder dgl. hintergreifen. Üblicherweise befinden sich die Haltezungen dabei an der Radabdeckung, während die Rastschulter oder dgl. am Fzg-Rad oder dem sog. Radkörper vorgesehen ist.

Während sich diese bekannten Abdeckscheiben noch relativ einfach auf den Radkörper aufsetzen lassen, nämlich durch mehr oder weniger starkes seitliches Andrücken, ist eine Demontage der Abdeckscheiben praktisch nur mit einem geeigneten Werkzeug möglich, wobei oftmals Abdeckscheiben auch mit einem Schraubendreher vom Radkörper abgehebelt werden, wodurch jedoch sowohl der Radkörper als auch die Abdeckscheibe beschädigt werden können.

Eine andere Abdeckscheiben-Befestigung ist aus der US 5,205,615 bekannt. Demnach wird die Abdeckscheibe von mehreren jeweils in einen Hinterschnitt einer geeigneten Nut eingeführten Stiften gehalten, wozu es sowohl bei der Montage als auch bei einer Demontage erforderlich ist, dass die Abdeckscheibe gegen Federkraft zunächst an den Radkörper angedrückt und danach gegenüber dem Radkörper um die Rad-Drehachse verdreht wird, und zwar bei einer Demontage in entgegensetzter Richtung zur Montage. Alleine dies macht die Montage und Demontage einer solchen Abdeckscheibe sehr kompliziert, abgesehen davon, dass es äußert aufwändig bzw. für den Fahrer des Personenkraftwagens praktisch unmöglich ist, die Abdeckscheibe gleichzeitig anzudrücken und in der richtigen Richtung um die Radachse zu verdrehen.

Hiermit soll nun eine Abdeckscheibe mit einer Haltevorrichtung aufgezeigt werden, die sich durch einfache Montierbarkeit und Demontierbarkeit auszeichnet. Insbesondere soll die Abdeckscheibe ohne Werkzeug demontierbar sein (=Aufgabe der vorliegenden Erfindung).

Die Lösung dieser Aufgabe ist dadurch gekennzeichnet, dass die Haltevorrichtung durch ein nochmaliges (bezüglich der Montagerichtung) gleichgerichtetes Andrücken der Abdeckscheibe deaktiviert wird, so dass die Abdeckscheibe vom Radkörper einfach abnehmbar ist. Vorteilhafte Aus- und Weiterbildungen sind Inhalt der Unteransprüche.

Erfindungsgemäß wird die gleiche Tätigkeit oder Bewegung, die zum Montieren der Abdeckscheibe ausgeführt wird, und die - wie bekannt und erläutert - ohne Werkzeug durchgeführt werden kann, auch zum Demontieren ausgeführt, indem die Abdeckscheibe nochmals an den Radkörper angedrückt wird. Dies ist dann ähnlich der Betätigung eines Kugelschreibers, bei dem durch gleichgerichtetes Drücken des Betätigungsknopfes sowohl die Mine aus dem Stift ausgefahren als auch wieder in diesen eingefahren werden kann. Dass unter Ausnützung dieses technisch grundsätzlich bekannten Prinzips eine Abdeckscheibe eines Fahrzeug-Rades nicht nur einfach montiert, sondern ebenso einfach demontiert werden kann, liegt auf der Hand.

In einer bevorzugten Ausführungsform besteht die Haltevorrichtung aus einer Kulissenbahn sowie aus einem darin (beim Montieren der Abdeckscheibe) geführten Arretierstift, wobei eines dieser Elemente dem Radkörper und das andere der Abdeckscheibe zugeordnet ist. Wenn nun der Arretierstift mit seinem freien Ende beim Ansetzen der Abdeckscheibe an den Radkörper derart in der Kulissenbahn geführt wird, dass er mit erstmaligen Andrücken der Abdeckscheibe in eine Rastposition in der Kulissenbahn gelangt, so ist die Abdeckscheibe zunächst fest am Radkörper gehalten. Wird dann bei nochmaligem Andrücken der Abdeckscheibe das freie Ende des Arretierstiftes aus dieser Rastposition heraus in einen Kulissenbahn-Abschnitt überführt, über den der Arretierstift aus der Kulissenbahn herausgeführt wird, so kann danach die Abdeckscheibe einfach vom Radkörper abgenommen werden. Dabei kann dieses Andrücken der Abdeckscheibe mit oder ohne Zuhilfenahme zusätzliche Hilfsmittel erfolgen.

Wenn dabei die bereits montierte Abdeckscheibe nur nach Überwindung einer Federkraft an den Radkörper andrückbar ist, so ist gewährleistet, dass ohne eine derartige Krafteinwirkung der Arretierstift mit seinem freien Ende in der Rastposition verbleibt, so dass sich im üblichen Fahrbetrieb des Fahrzeuges die Abdeckscheibe nicht selbsttätig lösen und sodann abhanden kommen kann. Ferner kann die zu überwindende Federkraft bewirken, dass bei nochmaligem Andrücken der Abdeckscheibe der Arretierstift mit seinem freien Ende tatsächlich aus der Rastposition der Kulissenbahn in den gewünschten, letztlich aus der Kulissenbahn herausführenden Kulissenbahn-Abschnitt gelangt. Schließlich wird auch die letztgenannte Bewegung durch die vorhergehend zu überwindende Federkraft unterstützt.

In diesem Zusammenhang sei darauf hingewiesen, dass zur Bereitstellung dieser Federkraft ein eigenständiges Federelement vorgesehen sein kann, das an geeigneter Stelle und bspw. als Schrauben-Druckfeder ausgebildet, zwischen der Abdeckscheibe und dem Radkörper angeordnet sein kann. Im Sinne einer vorteilhaften Funktionsvereinigung kann jedoch auch die Abdeckscheibe selbst federnd - bspw. in Form einer Membran - ausgebildet sein und somit quasi als Tellerfeder wirken. Dabei kann sich die Abdeckscheibe zumindest mit Abschnitten ihres Umfangs am Radkörper abstützen, während bspw. in der Mitte der Abdeckscheibe oder an anderen Umfangsabschnitten die Haltevorrichtung vorgesehen ist, was erfordert, dass in dem (oder ggf. in den mehreren) letztgenannten Bereichen eine gewünschte Relativbewegung zwischen der Abdeckscheibe und dem Radkörper möglich ist.

Wenn der Arretierstift an der Abdeckscheibe befestigt ist, ist demzufolge die genannte Kulissenbahn dem Fahrzeugrad oder Radkörper zugeordnet. Um im wesentlichen übliche Radkörper verwenden zu können, wird vorgeschlagen, die Kulissenbahn in einem separaten Bauteil, nämlich einem speziellen sog. Radnabeneinsatz vorzusehen, der/das in den Radkörper einsetzbar ist. Dabei ist es konstruktiv einfacher, in einem derartigen Bauteil eine Kulissenbahn einzubringen, als dort den sog. Arretierstift anzubringen. Letzterer kann einfacher und insbesondere auch bspw. durch einen sog. Ringsegment-Fortsatz geschützt an der dem Radkörper zugewandten Innenseite der Abdeckscheibe angebracht werden. Im übrigen ist es von Vorteil, wenn diese Befestigung des Arretierstiftes an der Abdeckscheibe und/oder der Arretierstift selbst zumindest geringfügig flexibel ist, da dann der Arretierstift mit seinem freien Ende optimal der - im Hinblick auf die gewünschte Funktion - notwendigerweise gekrümmt verlaufenden Kulissenahn folgen kann.

Selbstverständlich ist es erforderlich, das bereits genannte, zusätzliche separate Bauteil, nämlich den Radnabeneinsatz, auf geeignete Weise am Fzg.-Rad bzw. am sog. Radkörper desselben zu befestigen. Besonders einfach kann dies erfolgen, wenn dieser Radnabeneinsatz über zumindest geringfügig federnd ausgebildete Haltenasen im Radkörper gehalten wird, wobei dann vorteilhafterweise auch ein einfacher Austausch des Radnabeneinsatzes möglich ist, wenn dies erforderlich sein sollte. Zur Sicherung dieser vorgeschlagenen Verbindungstechnik zwischen dem Radnabeneinsatz und der Abdeckscheibe kann letztere auf ihrer dem Radkörper zugewandten Seite einen sog. Ringsegment-Fortsatz aufweisen, der im zusammengebauten Zustand eine den Radnabeneinsatz gegenüber dem Radkörper freigebende Bewegung der Haltenasen verhindert. Dabei kann ein solcher Ringsegment-Fortsatz noch eine zweite Funktion übernehmen, nämlich die Abdeckscheibe bei der Montage bezüglich des Radkörpers oder des Radnabeneinsatzes führen oder zentrieren.

In diesem Zusammenhang sei erwähnt, dass grundsätzlich eine einzige erfindungsgemäße Haltevorrichtung (bestehend aus Arretierstift und Kulissenbahn) ausreichend sein kann, im Hinblick auf eine sicherere Befestigung sowie eine sichere Montage können (auch unter Symmetrieaspekten) bevorzugt einander im wesentlichen diametral gegenüberliegend zwei Arretierstifte mit diesen zugeordneten Kulissenbahnen vorgesehen sein.

Bei Zusammentreffen ungünstigster Umstände kann eine erfindungsgemäße Abdeckscheibe relativ einfach von einer hierzu nicht berechtigten Person oder sogar durch einen seitlichen Steinschlag vom Radkörper abgenommen werden, wenn - wie angegeben - hierzu lediglich die Abdeckscheibe gegen den Radkörper angedrückt und dabei um eine gewisse Wegstrecke gegen den Radkörper verschoben werden muss. Um dies zu verhindern, kann im Sinne einer vorteilhaften Weiterbildung die Abdeckscheibe mit einem nur bei exaktem Andrücken überwindbaren Sicherungselement versehen sein, welches bei nicht exaktem Andrücken der Abdeckscheibe verhindert, dass diese Abdeckscheibe soweit verlagert wird, dass sie vom Radkörper einfach abnehmbar ist.

Vorgesehen sein kann somit eine sog. "Blockadevorrichtung" oder dgl., welche ein unbefugtes oder unbeabsichtigtes Abnehmen der Abdeckscheibe verhindert. Diese "Blockadevorrichtung" in Form eines geeigneten erfindungsgemäßen Sicherungselementes soll andererseits relativ einfach und insbesondere ohne Spezialwerkzeug überbrückbar sein. Diesen Anforderungen kann auf einfache Weise dadurch gerecht werden, dass das Andrücken der Abdeckscheibe in einer ganz speziellen Art und Weise erfolgen muss um erfolgreich zu sein, d.h. um die Abdeckscheibe nach Andrücken mit geringfügigem Verlagern einfach vom Radkörper abnehmen zu können. Letzteres setzt voraus, dass eine Haltevorrichtung zwischen der Abdeckscheibe und dem Radkörper durch diese Verlagerung der Abdeckscheibe gelöst wurde, was nur dann erfolgen soll, wenn die Abdeckscheibe beim Andrücken an den Radkörper um eine gewisse Mindeststrecke gegenüber dem Radkörper verschoben wurde. Wenn nun das erfindungsgemäße Sicherungselement verhindert, dass bei fehlerhaftem, d.h. nicht exaktem Andrücken der Abdeckscheibe diese um die genannte Mindeststrecke gegen den Radkörper verschoben wird, so kann die Abdeckscheibe dann - wie gewünscht - auch nicht vom Radkörper abgenommen werden, da die genannte Haltevorrichtung nicht gelöst werden konnte.

Das vorgeschlagene Sicherungselement kann auf Basis verschiedener Wirkprinzipien arbeiten. Bevorzugt können zwei Bauteile, von denen eines an der Abdeckscheibe und das andere letztlich am Radkörper befestigt ist, immer dann ineinander verhaken, wenn die Abdeckscheibe nicht in exakter Weise an den Radkörper angedrückt wird. Dabei kann dieses sog. Verhaken, das im weitesten Sinne zu verstehen ist, formschlüssig und/oder reibschlüssig erfolgen. Reibschluss lässt sich einfach nutzen, wenn das Sicherungselement als ein Paar von Passungselementen ausgebildet ist, wobei ein erstes, aus optischen sowie funktionalen Gründen an der dem Radkörper zugewandten Seite der Abdeckscheibe vorgesehenes und im wesentlichen senkrecht zu dieser ausgerichtetes Passungselement unter enger Passung in oder auf ein letztlich am Radkörper befestigtes zweites Passungselement einführbar ist.

Was das genannte exakte Andrücken der Abdeckscheibe betrifft, aufgrund dessen eine soweit gehende Verlagerung der Abdeckscheibe ermöglicht wird, dass daraufhin die Haltevorrichtung zwischen der Abdeckscheibe und dem Radkörper deaktiviert wird, so kann dies insbesondere dann vorliegen, wenn die Abdeckscheibe exakt senkrecht zur Radebene bzw. Abdeckscheiben-Ebene angedrückt wird, d.h. exakt in Richtung der Radachse. Dies kann entweder dann erreicht werden, wenn die wie üblich zentrisch zum Rad angebrachte, bevorzugt kreisförmige Abdeckscheibe exakt in ihrem (Kreis)-Mittelpunkt mit entsprechendem Anpressdruck beaufschlagt wird, oder wenn dieser Anpressdruck zum Andrücken der Abdeckscheibe an den Radkörper an zwei einander exakt diametral gegenüberliegenden Stellen im Randbereich der Abdeckscheibe aufgebracht wird. In diesem Zusammenhang ist es besonders sicher, wenn bei Verwendung von Paaren von Passungselementen als Sicherungselemente über dem Umfang der kreisförmigen Abdeckscheibe betrachtet um 180° gegeneinander versetzt zwei Paare von Passungselementen vorgesehen sind. Dabei können diese Passungselement-Paare derart ausgelegt sein, dass nur dann, wenn der Anpressdruck zum Andrücken der Abdeckscheibe an den Radkörper in deren Bereich aufgebracht wird, diese die für das Deaktivieren der Haltevorrichtung erforderliche Verlagerung bzw. Verschiebebewegung der Abdeckscheibe ermöglichen.

Eine bevorzugte, da einfache und dennoch zuverlässige Gestaltung der miteinander als erfindungsgemäßes Sicherungselement zusammenwirkenden Passungselemente ergibt sich, wenn eines der Passungselemente in Form eines im Querschnitt rechteckigen Stiftes und das andere Passungselement als eine diesen Stift zumindest zwischen zwei einander gegenüberliegenden Seiten führende Struktur ausgebildet ist. Bildlich beschrieben kann das Passungselement-Paar hierfür bspw. wie eine Streichholzschachtel aufgebaut sein, wobei das innere die Streichhölzer aufnehmende Schachtelteil mit rechteckigem Querschnitt als "Stift" an der Abdeckscheibe angebunden ist und beim Andrücken der Abdeckscheibe gegen den Radkörper in das äußere Schachtel-Hüllenteil, das als genannte "Struktur" diesen "Stift" führt und letztlich am Radkörper befestigt ist, eingeführt wird. Dabei sei ausdrücklich darauf hingewiesen, dass diese letztlich am Radkörper befestigte Struktur bzw. allg. das letztlich am Radkörper befestigte (zweite) Passungselement des erfindungsgemäßen Sicherungselementes keineswegs direkt am Radkörper befestigt sein muss. Vielmehr kann dieses zweite Passungselement (bzw. die genannte den Stift führende Struktur) auch an einem Zwischenelement zwischen der Abdeckscheibe und dem Radkörper vorgesehen sein, welches bspw. direkt die Abdeckscheibe und die zugehörige Haltevorrichtung trägt, und das seinerseits geeignet am Radkörper befestigt ist, so wie dies weiter oben in Form des dort sog. Radnabeneinsatzes gezeigt ist.

Um die Anforderung an die Fertigungs-Toleranzen am besagten Passungselement-Paar nicht ins Extreme anwachsen zu lassen, kann dieses Passungselement-Paar derart gestaltet sein, dass nach teilweiser Verlagerung der Abdeckscheibe eine stärker verengte Passung vorliegt. Dies stellt sicher, dass tatsächlich nur dann; wenn die Abdeckscheibe völlig exakt in Richtung der Radachse gegen den Radkörper angedrückt wird, eine Freigängigkeit zwischen diesen Passungselementen gewährleistet ist. Bereits bei geringer schräger Krafteinleitung hingegen werden diese Passungselemente dann an dieser verengten Passung ineinander verhaken und somit eine weitere Verlagerung der Abdeckscheibe in einer die Haltevorrichtung zwischen Abdeckscheibe und Radkörper lösenden Richtung verhindern.

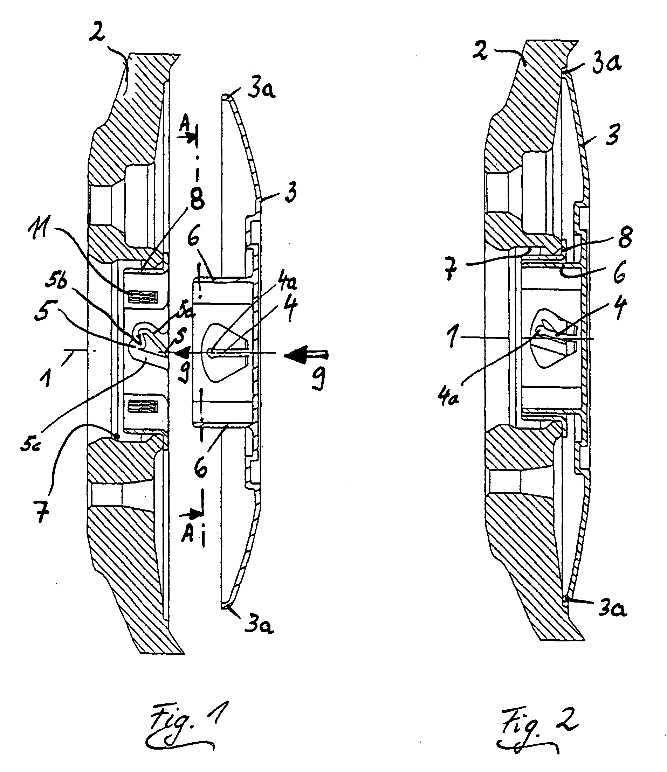

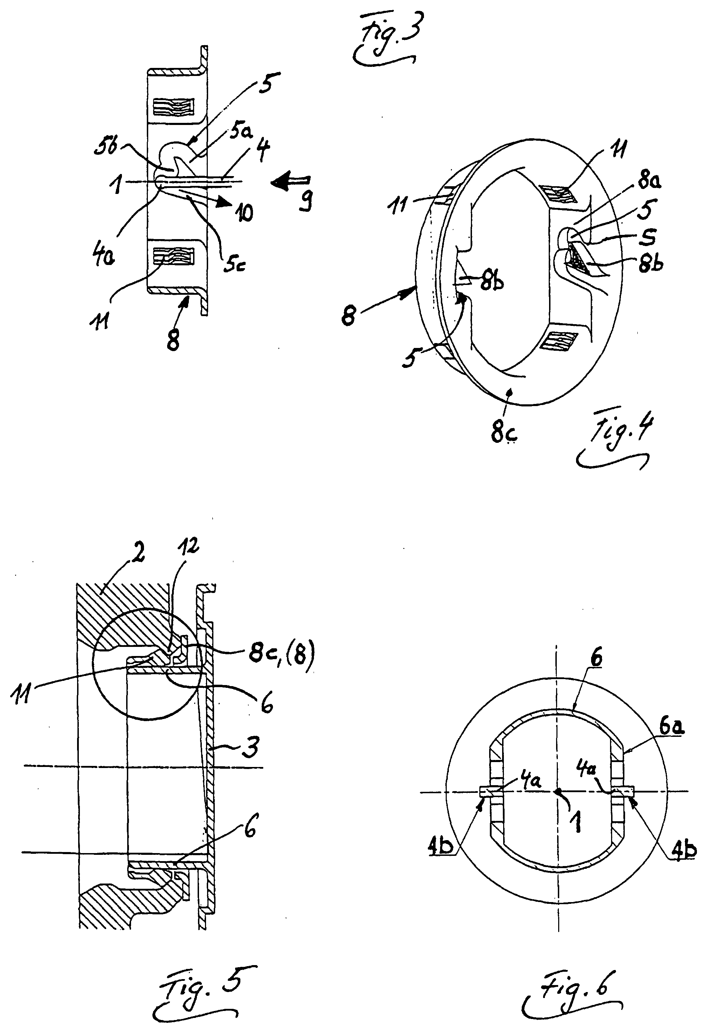

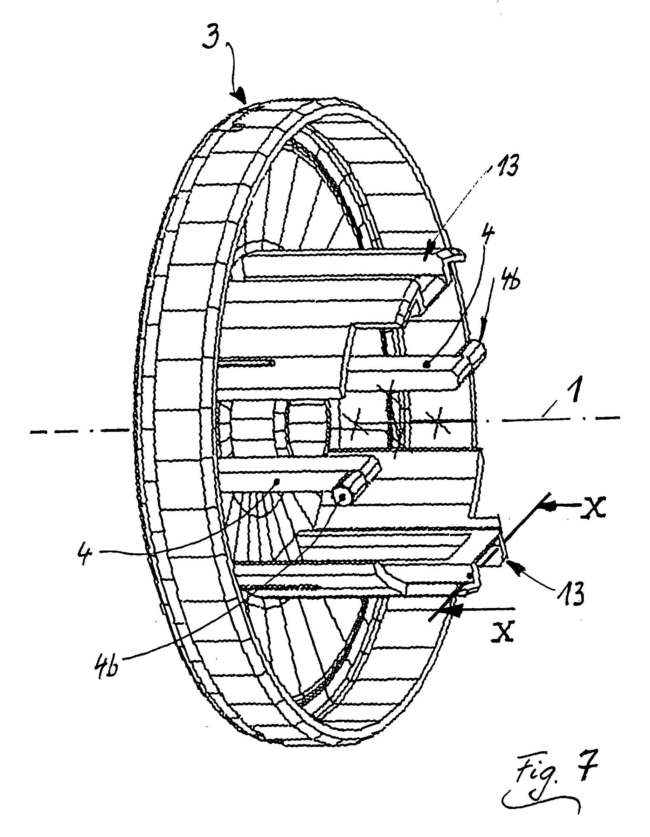

Im folgenden wird die Erfindung anhand eines bevorzugten Ausführungsbeispiels weiter erläutert. Dabei zeigt die beigefügte Figur 1 einen TeilLängsschnitt durch ein Fzg.-Rad, in dem sich bereits ein o.g. Radnabeneinsatz befindet und auf das bzw. in den die daneben dargestellte Abdeckscheibe aufgebracht werden soll. Figur 2 zeigt entsprechend der Darstellung von Figur 1 die Verhältnisse bei montierter Abdeckscheibe.
Aus **Figur 3,** in der lediglich der Radnabeneinsatz mit Kulissenbahn im Schnitt sowie der in der Kulissenbahn geführte Arretierstift dargestellt sind, werden die Verhältnisse bei einer Demontage der Abdeckscheibe ersichtlich. In **Figur 4** ist der sog. Radnabeneinsatz perspektivisch dargestellt und aus **Figur 5**, die einen gegenüber Figur 1 um die Radachse gedrehten TeilLängsschnitt durch den Radkörper sowie den Radnabeneinsatz zeigt, wird die Befestigung des letzteren am Radkörper ersichtlich.
**Figur 6** zeigt den Detailschnitt A-A aus Figur 1.
**Figur 7** zeigt ergänzend zu den bislang genannten Figuren sog. Sicherungsmittel oder eine "Blockadevorrichtung". Dabei ist lediglich eine 3-D-Ansicht der Abdeckscheibe von hinten bzw. innen dargestellt.
Die weiteren **Figuren 8a -8c** zeigen jeweils einen Schnitt durch ein Paar von Passungselementen, die ein als "Blockadevorrichtung" dienendes Sicherungselement bilden, in drei verschiedenen Positionen der Abdeckscheibe gegenüber dem Radkörper bzw. einem daran angebrachten Zwischenelement, welches das zweite Passungselement des Passungselement-Paares trägt.
Erfindungswesentlich können grundsätzlich sämtliche näher beschriebenen Merkmale sein.

Zunächst auf die **Figuren 1, 2** Bezug nehmend ist mit der Bezugsziffer 1 die Drehachse eines nur teilweise dargestellten Radkörpers 2 eines Fahrzeug-Rades, insbesondere eines Rades eines PKW's, bezeichnet. Auf diesen Radkörper 2 soll seitlich auf einfache Weise eine Rad-Abdeckscheibe 3 aufgebracht werden, die auf ebenso einfache Weise (und insbesondere ohne Zuhilfenahme eines Werkzeugs) auch wieder vom Radkörper 2 demontiert werden kann. Hierzu sind einander diametral gegenüberliegend zwei Haltevorrichtungen vorgesehen, die jeweils aus einem Arretierstift 4 sowie einer Kulissenbahn 5 bestehen.

An der dem Radkörper 2 zugewandten sog. Innen-Seite der Abdeckscheibe 3 sind konzentrisch zur Drehachse 1 und dabei einander diametral gegenüberliegend zwei Ringsegment-Fortsätze 6 vorgesehen, wobei der Durchmesser eines durch diese korrespondierenden Ringsegment-Fortsätze 6 gebildeten Kreisringes annähernd an einen Radnaben-Durchbruch 7 im Radkörper 2 angepasst ist. Zwischen diesen beiden Ringsegment-Fortsätzen 6 sind einander im wesentlichen diametral gegenüberliegend zwei sog. Arretierstifte 4 an der Innenseite der Abdeckscheibe 3 befestigt, die sich annähernd in Richtung der Drehachse 1 erstrecken. Diese bzw. deren Befestigung ist relativ flexibel, d.h. jeder Arretierstift 4 ist quasi federnd an der Abdeckscheibe 3 angebunden. Die freien Enden 4a der Arretierstiftes4 sind mit zwei fluchtenden, lotrecht zur Drehachse 1 nach außen weisend angeordneten Haltestiften 4b versehen, wie aus **Fig.6** hervorgeht.

Weiterer Bestandteil jeder Haltevorrichtung ist eine Kulissenbahn 5, von denen zwei - analog den Arretierstiften 4 einander im wesentlichen diametral gegenüberliegend - an oder in der Innenfläche eines außenseitig kreiszylindrischen und dabei im wesentlichen ringförmigen Radnabeneinsatzes 8 vorgesehen sind. Dessen Gestalt geht am besten aus **Fig.4** hervor. Die Kulissenbahnen 5 sind aus einem dickeren Wandabschnitt 8a des Radnabeneinsatzes 8 herausgeformt und weisen einen sog. Hineinführungs-Abschnitt 5a, eine sog. Rastposition 5b, sowie einen Herausführungs-Abschnitt 5c auf (vgl. auch **Fig.3).** Der Hineinführungs-Abschnitt 5a, beginnend in einer Startposition S (in **Fig.1** auf der Höhe der Drehachse 1), und der Herausführungs-Abschnitt 5c sind gegenüber der Drehachse 1 rampenförmig geneigt, wobei sich in der Darstellung nach **Fig.1** der Abschnitt 5a oberhalb und der Abschnitt 5c unterhalb der Drehachse 1 befindet. Dazwischen liegt die sog. Rastposition 5b, welche in dieser Figurendarstellung geringfügig oberhalb der Drehachse 1 liegt. Diese Rastposition stellt quasi einen Umkehrpunkt in der Kulissenbahn 5 ar. Dabei wird die Kulissenbahn 5 bzw. deren in dieser Reihenfolge zusammenhängende Abschnitte 5a, 5b, 5c außenseitig ganz oder teilweise durch den dickeren Wandabschnitt 8a und innenseitig durch ein sog. Leitstück 8b begrenzt, das an sich aber auch Bestandteil des dickeren Wandabschnittes 8a ist.

Wie für die folgende Erläuterung am besten aus **Fig.1** hervorgeht, ist der Radnabeneinsatz 8 in den bereits erwähnten Radnaben-Durchbruch 7, der von kreisförmigem Querschnitt ist, eingesetzt. Nun werde die Abdeckscheibe 3 gemäß Pfeilrichtung 9 derart von der Seite auf den Radkörper 2 aufgesetzt, dass Jeder Arretierstift 4 mit seinem am freien Ende 4a befindlichen Haltestift 4b in die zugeordnete Kulissenbahn 5 bzw, in den Hineinführungs-Abschnitt 5a derselben eingeführt wird. Zentriert bzw. geeignet geführt wird die Abdeckscheibe 3 dabei durch die beiden bereits erwähnten Ringsegment-Fortsätze 6 und ihre sog. Abplattungen 6a (vgl. **Fig.6**), die hierbei mit ihren Außenflächen an der zugeordneten Innenfläche des Radnabeneinsatzes 8 entlang gleiten. Mit dieser Einschiebebewegung gemäß Pfeilrichtung 9 gelangt die Abdeckscheibe 3 schließlich in die in **Fig.2** dargestellte Position, die den montierten Zustand wiedergibt. Dabei befindet sich jeder Haltestift 4b jedes Arretierstiftes 4 in der zugeordneten Kulissenbahn 5 in der bereits genannten Rastposition 5b, wobei diese Position erst dann eingenommen werden kann, wenn die zuvor mit ihrem Außenumfang 3a bereits am Radkörper 2 zum Anliegen gekommene Abdeckscheibe 3 im Bereich der Arretierstifte 4 weiter gemäß Pfeilrichtung 9 angedrückt wird. Hierbei wirkt die Abdeckscheibe 3 selbst somit als Membran- bzw. Tellerfeder, die im montierten Zustand gemäß **Fig.2**, d.h. wenn sich der Haltestift 4b am freien Ende 4a jedes (dann verspannten) Arretierstiftes 4 in der Rastposition 5b befindet, quasi vorgespannt ist.

Die Verhältnisse bei einer Demontage der Abdeckscheibe 3 gehen am besten aus **Fig.3** hervor. Hierfür wird die Abdeckscheibe 3, welche in dieser Figur nicht bzw. nur durch einen ihrer Arretierstifte 4 dargestellt ist, abermals gemäß Pfeilrichtung 9 gegen den Radkörper 2 bzw. gegen den darin befindlichen Radnabeneinsatz 8 angedrückt, und zwar im wesentlichen im Bereich der beiden Arretierstifte 4. Durch die daraus resultierende Verschiebebewegung der Arretierstifte 4 gemäß Pfeilrichtung 9 (diese Verschiebebewegung wird durch die bereits erläuterte federnde Eigenschaft der quasi vorgespannten Abdeckscheibe 3 ermöglicht), wird jedes freie Ende 4a des durch seine Auslenkung aus der sog. Nulllage (entsprechend **Fig.1)** vorgespannten Arretierstiftes 4 aus der Rastposition 5b der Kulissenbahn 5 heraus in den Herausführungs-Abschnitt 5c der Kulissenbahn 5 überführt, wonach erstens aufgrund der beschriebenen Federwirkung und zweitens auch manuell die Abdeckscheibe 3 gegen Pfeilrichtung 9 vom Radkörper 2 abgenommen, d.h. vom Radnabeneinsatz 8 entfernt werden kann. Dabei bewegt sich der Haltestift 4b am freien Ende 4a des Arretierstiftes 4 im Herausführungs-Abschnitt 5c der Kulissenbahn 5 gemäß Pfeil 10.

Wie der Radnabeneinsatz 8 im Radkörper 2 bzw. im Radnaben-Durchbruch 7 desselben gehalten wird, geht am besten aus **Fig.5** hervor. Aus der Wand des Radnabeneinsatzes 8 sind an insgesamt vier Stellen und dabei einander paarweise diametral gegenüberliegend (vgl. hierzu auch **Figuren 1** und **4**) Haltenasen 11 herausgearbeitet, die über die Außenfläche des außenseitig kreiszylindrischen Radnabeneinsatzes 8 federnd hinausragen. Wie **Fig.5** zeigt, hintergreifen diese federnden Haltenasen 11 im montierten Zustand einen entsprechenden ringförmigen Vorsprung 12 des Radkörpers 2 im Radnaben-Durchbruch 7. In Zusammenwirken mit einem Randsteg 8c des Radnabeneinsatzes 8 kann sich letzterer somit (zumindest in Richtung der Drehachse 1) nicht gegenüber dem Radkörper 2 bewegen, solange die federnden Haltenasen 11 nicht in Radialrichtung nach innen zur Drehachse 1 hin ausgelenkt werden können. Dies wird wie dargestellt durch die beiden Ringsegment-Fortsätze 6 der Abdeckscheibe 3, die sich bei montierter Abdeckscheibe 3 im Bereich der Haltenasen 11 innerhalb derselben befinden, verhindert. Ist hingegen die Abdeckscheibe 3 nicht montiert, so kann auch der Radnabeneinsatz 8 gegen Pfeilrichtung 9 demontiert werden, da sich bei Aufbringen entsprechender Zugkraft die Haltenasen 11 radial geringfügig nach innen bewegen. Umgekehrt ist selbstverständlich auch eine Montage des Radnabeneinsatzes 8 möglich. Im übrigen kann - falls gewünscht oder erforderlich - eine bestimmte Orientierung in Umfangsrichtung zwischen der Abdeckscheibe 3 und dem Radnabeneinsatz 8 vorgegeben sein oder vorgesehen werden.

Die erfindungsgemäße Abdeckscheibe 3 ist mit der dargestellten und detailliert beschriebenen Haltevorrichtung (im wesentlichen bestehend aus den beiden Arretierstiften 4 und den zugeordneten Kulissenbahnen 5) nicht nur einfach montierbar, sondern insbesondere ebenso einfach demontierbar. Für beide genannten Vorgänge muss lediglich eine Andrückkraft gemäß Pfeilrichtung 9 auf die Abdeckscheibe 3 beispielsweise im Bereich der Arretierstifte 4 aufgebracht werden.

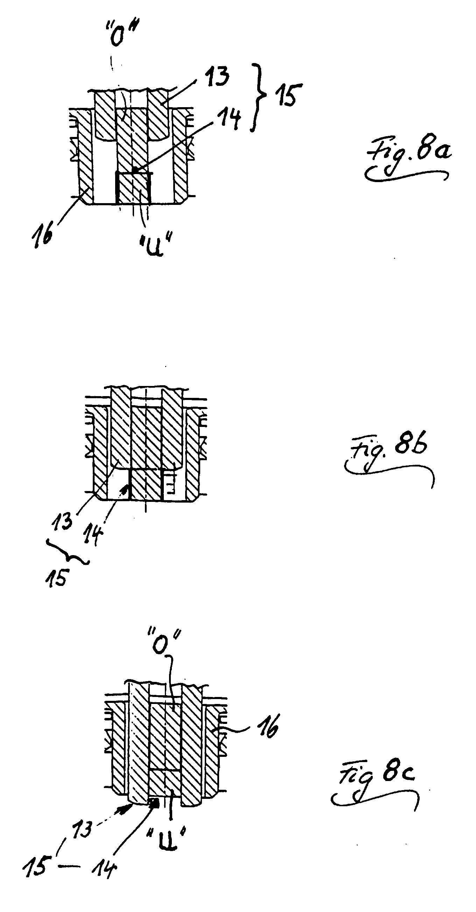

Anhand der weiteren **Figuren 7, 8a - 8c** wird nun eine vorteilhafte Weiterbildung beschrieben, und zwar eine sog. Blockadevorrichtung in Form hier zweier Sicherungselemente , die durch sog. Passungselemente gebildet werden, und die sicherstellen, dass die Abdeckscheibe nur bei exaktem Andrücken derart verlagert werden kann, dass danach diese Abdeckscheibe einfach vom Radkörper abgenommen werden kann. Zunächst Bezug nehmend auf **Figur 7** ist analog den vorhergehenden Figuren mit der Bezugsziffer 1 die Drehachse eines nicht dargestellten Fahrzeug-Rades bezeichnet, wobei auf dessen sog. Radkörper eine Abdeckscheibe 3 aufgesetzt werden kann, von der hier im wesentlichen die Rückseite bzw. Innenseite, d.h. die dem nicht dargestellten Radkörper zugewandte Seite sichtbar ist. Die Drehachse 1 verläuft dabei durch das Zentrum bzw. durch den Mittelpunkt der Abdeckscheibe 3 und steht senkrecht auf einer von dieser beschriebenen Ebene.

Von dieser Innenseite der Abdeckscheibe 1 ragen - wie weiter oben ausführlich erläutert wurde - zwei Arretierstifte 4 im wesentlichen parallel zur Drehachse 1 nach innen, d.h. zum Radkörper hin ab. Am freien Ende jedes Arretierstiftes 4 ist senkrecht zu diesem ein Haltestift 4b vorgesehen. Dieser Haltestift 4b des Arretierstiftes 4 wirkt mit einer Kulissenbahn zusammen, die in einem in Figur 7 nicht dargestellten sog. Radnabeneinsatz vorgesehen ist, der am Radkörper befestigt ist, und bildet zusammen mit diesem bzw. dieser eine Haltevorrichtung für die Abdeckscheibe 3 am Radkörper. Die genannte Kulissenbahn ist dabei derart gestaltet, dass die Haltevorrichtung durch Andrücken der Abdeckscheibe 3 an den Radkörper aktiviert wird, so dass die Abdeckscheibe am Radkörper fixiert ist, und dass durch nochmaliges gleichgerichtetes Andrücken der Abdeckscheibe unter gleichzeitiger Verlagerung derselben zum Radkörper hin diese Haltevorrichtung deaktiviert wird, so dass danach die Abdeckscheibe 3 einfach vom Radkörper abgenommen werden kann.

Neben den beiden Arretierstiften 4 ragen nun - wie **Figur 7** zeigt - von der Innenseite der Abdeckscheibe 3 ebenfalls parallel zur Drehachse 1 zwei sog. erste Passungselemente 13 ab, die abseits des Abdeckscheiben-Mittelpunktes einander diametral gegenüberliegend, d.h. über dem Umfang der kreisförmigen Abdeckscheibe betrachtet um 180° gegeneinander versetzt angeordnet sind. Jedes dieser Passungselemente 13 bildet eine rinnenförmige Struktur mit rechteckigem Querschnitt, wobei sich diese "Rinne" exakt parallel zur Drehachse 1 erstreckt. In diese Rinne jedes Passungselementes 13 ragt ein zweites Passungselement 14, das quasi als Stift mit entsprechendem rechteckigen Querschnitt ausgebildet ist, hinein. Dieses zweite Passungselement 14 ist nur in den **Figuren 8a - 8c** dargestellt, wobei diese **Figuren 8a - 8c** den Schnitt X-X aus **Fig.7** durch das Passungselement 13 (dort ohne zweites Passungselement 14) zeigen.

Das lediglich aus den **Figuren 8a - 8c** ersichtliche zweite Passungselement 14 in Form eines im wesentlichen Abschnitt desselben einen (im wesentlichen) rechteckigen Querschnitt aufweisenden Stiftes ist letztlich am Radträger und hier am im vorletzten Absatz genannten Radnabeneinsatz befestigt bzw. vorgesehen. Unter ausreichendem Abstand umgeben ist dieses stiftartige zweite Passungselement 14 dabei von einer sog. Randstruktur 16, die jedoch für die eigentliche Funktion der beiden miteinander als sog. Sicherungselement 15 zusammenwirkenden Passungselemente 13, 14 nicht erforderlich ist.

In den **Figuren 8a - 8c** ist aufeinanderfolgend dargestellt, wie sich die relative Lage der beiden Passungselemente 13, 14 zueinander ändert, wenn die Abdeckscheibe 3 und damit das daran befestigte erste Passungselement 13 zum Deaktivieren der besagten Haltevorrichtung gegen den Radkörper angedrückt und dabei zu diesem hin verlagert wird. Mit dieser Verschiebebewegung bzw. Verlagerung das Passungselementes 13 wird das zweite, als Stift ausgebildete Passungselement 14 in die "Rinne" des ersten Passungselementes 13 eingeführt. Dabei führt die "Rinne" bzw. die das erste Passungselement 13 bildende Struktur den "Stift" in Form des zweiten Passungselementes 14 wie ersichtlich zwischen zwei einander gegenüberliegenden Seiten.

Die Passung zwischen den beiden Passungselementen 13, 14 ist dabei derart eng bemessen, dass die in der **Figurenfolge 8a - 8c** dargestellte Verlagerung nur dann möglich ist, wenn die Abdeckscheibe 3 exakt in Richtung der Drehachse 3 angedrückt wird. Wenn nun - wie dargestellt - über dem Umfang der Abdeckscheibe 3 zueinander um 180° versetzt zwei derartige Paare von Passungselementen 13, 14 vorgesehen sind, ist diese genannte Voraussetzung des exakten Andrückens der Abdeckscheibe 3 gegen den Radkörper praktisch nur dann erfüllbar, wenn der entsprechende Anpressdruck auf die (in **Fig.7** nicht sichtbaren) Außenseite der Abdeckscheibe 3 exakt in denjenigen Bereichen aufgebracht wird, hinter denen die Passungselemente 13 von der Innenseite der Abdeckscheibe 13 abragen, wobei zusätzlich der gesamte Anpressdruck gleichmäßig auf diese beiden Stellen aufzuteilen ist. Wird hingegen diese Anforderung nicht erfüllt, d.h. wird die Abdeckscheibe 13 von außen her ungleichmäßig oder über die falschen Stellen gegen den Radkörper gedrückt, so werden aufgrund der dann "schrägen" Belastung die beiden Passungselemente 13, 14 eines Passungselement-Paares ineinander verhaken, d.h. derart stark aneinander reiben, dass Selbsthemmung auftritt und die Abdeckscheibe 13 nicht weiter zum Radkörper hin verlagert bzw. das Passungselement 14 nicht weiter in das Passungselement 13 eingeführt werden kann. Zusammenfassend bilden die Passungselemente 13, 14 (bzw. das entsprechende Passungselement-Paar) somit ein Sicherungselement 15, welches bei nicht exaktem Andrücken der Abdeckscheibe 3 gegen den Radkörper verhindert, dass diese Abdeckscheibe 3 soweit verlagert wird, dass sie vom Radkörper einfach abnehmbar ist.

Wie den **Figuren 8a - 8c** entnommen werden kann, ist das Passungselement 14 derart gestaltet, dass nach teilweiser Verlagerung der Abdeckscheibe 3 eine stärker verengte Passung vorliegt. Der Querschnitt des rechteckigen "Stiftes" ist in dessen "unteren" Bereich "U" geringfügig größer als im Bereich "O" von dessen freien Ende. Während im "oberen" Bereich "O" das erste Passungselement 13 stets am zweiten Passungselement 14 anliegt, wenn die Abdeckscheibe 3 am Radkörper montiert ist, kommt im "unteren" Bereich "U" das erste Passungselement 13 nur dann mit dem zweiten Passungselement 14 in Kontakt, wenn die Abdeckscheibe 3 und somit das erste Passungselement 13 bereits um eine gewisse Wegstrecke zum Radkörper hin verlagert, d.h. "angedrückt" wurde. Das für ein Lösen der genanten Haltevorrichtung zwischen der Abdeckscheibe und dem Radkörper erforderliche stärkere Verlagern bzw. Andrücken der Radscheibe 3 und somit des Passungselementes 13 ist nur dann möglich, wenn die Abdeckscheibe 3 wie bereits beschrieben völlig exakt in Richtung der Radachse 1 gegen den Radkörper angedrückt wird, da nur dann eine Freigängigkeit zwischen den Passungselementen 13, 14 gewährleistet ist.

Das durch die Passungselemente 13, 14 gebildete Sicherungselement 15 bzw. die hier beiden Sicherungselemente 15 gewährleisten somit, dass nur bei exaktem Andrücken der Abdeckscheibe 3 ein Lösen der genannten Haltevorrichtung möglich ist, während bereits bei geringer schräger Krafteinleitung die Passungselemente 13, 14 ineinander verhaken und somit eine weitere Verlagerung der Abdeckscheibe 3 in einer die Haltevorrichtung zwischen Abdeckscheibe und Radkörper lösenden Richtung verhindern. Dabei zeichnet sich die vorgestellte Sicherungsvorrichtung 15 durch einfachen, gewichtssparenden, kostengünstigen Aufbau bei gleichzeitig sicherer Funktionserfüllung aus, wobei noch darauf hingewiesen sei, dass durchaus eine Vielzahl von Details insbesondere konstruktiver Art abweichend vom gezeigten Ausführungsbeispiel gestaltet sein kann, ohne den Inhalt der Patentansprüche zu verlassen.

### Bezugszeichenliste:

- 1: Drehachse
- 2: Radkörper
- 3: Abdeckscheibe
- 3a: Außenumfang (von 3)
- 4: Arretierstift
- 4a: freies Ende (von 4)
- 4b: Haltestift (an 4a)
- 5: Kulissenbahn
- 5a: Hineinführungs-Abschnitt
- 5b: Rastposition
- 5c: Herausführungs-Abschnitt
- 6: Ringsegment-Fortsatz
- 6a: Abplattung (von 6)
- 7: Radnaben-Durchbruch (in 2)
- 8: Radnabeneinsatz
- 8a: dickerer Wandabschnitt (von 8)
- 8b: Leitstück
- 8c: Randsteg
- 9: Pfeilrichtung
- 10: Pfeilrichtung
- 11: Haltenasen
- 12: Vorsprung (an 2 in 7)
- 13: Passungselement
- 14: Passungselement
- 15: Sicherungselement
- 16: Randstruktur
- O: oberer Bereich des stiftförmigen Passungselementes 14
- U: unterer Bereich des stiftförmigen Passungselementes 14
- S: Startposition an 5a, korrespondiert mit sog. Nulllage von 4a (Fig.1)

## Patentansprüche

1. Abdeckscheibe für ein Fahrzeug-Rad mit einer Haltevorrichtung, die durch axiales Andrücken der geeignet positionierten Abdeckscheibe (3) ohne Verdrehen derselben aktiviert wird und somit die Abdeckscheibe am Radkörper (2) fixiert,
**dadurch gekennzeichnet, dass** die Haltevorrichtung durch ein nochmaliges gleichgerichtetes Andrücken der Abdeckscheibe (3) ohne Verdrehen derselben deaktiviert wird, so dass die Abdeckscheibe vom Radkörper (2) einfach abnehmbar ist.

2. Abdeckscheibe mit Haltevorrichtung nach Anspruch 1,
**dadurch gekennzeichnet, dass** Elemente der Haltevorrichtung eine Kulissenbahn (5) sowie ein darin beim Montieren der Abdeckscheibe (3) geführten Arretierstift (4) sind, wobei eines dieser Elemente dem Radkörper (2) und das andere der Abdeckscheibe (3) zugeordnet ist, und dass der Arretierstift (4) mit seinem freien Ende (4a) beim Ansetzen der Abdeckscheibe an den Radkörper derart in der Kulissenbahn (5) geführt wird, dass er mit erstmaligen Andrücken der Abdeckscheibe in eine Rastposition (5b) in der Kulissenbahn (5) gelangt, und dass bei nochmaligem Andrücken der Abdeckscheibe (3) das freie Ende (4a) des Arretierstiftes (4) aus dieser Rastposition (5b) heraus in einen Kulissenbahn-Abschnitt (5c) überführt wird, über den der Arretierstift (4) aus der Kulissenbahn (5) herausführbar ist.

3. Abdeckscheibe mit Haltevorrichtung nach Anspruch 1 oder 2,
**dadurch gekennzeichnet, dass** die Abdeckscheibe (3) gegen Federkraft an den Radkörper (2) andrückbar ist.

4. Abdeckscheibe mit Haltevorrichtung nach einem der vorangegangenen Ansprüche,
**dadurch gekennzeichnet, dass** der Arretierstift (4) an der Abdeckscheibe (3) befestigt ist, wobei diese Befestigung und/oder der Arretierstift selbst zumindest geringfügig flexibel ist.

5. Abdeckscheibe mit Haltevorrichtung nach einem der vorangegangenen Ansprüche,
**dadurch gekennzeichnet, dass** die Kulissenbahn (5) in einem Radnabeneinsatz (8) vorgesehen ist, der in den Radkörper (2) einsetzbar ist.

6. Abdeckscheibe mit Haltevorrichtung nach Anspruch 5,
**dadurch gekennzeichnet, dass** der Radnabeneinsatz (8) über zumindest geringfügig federnd ausgebildete Haltenasen (11) im Radkörper (2) gehalten wird, wobei die montierte Abdeckscheibe (3) mit zumindest einem Ringsegment-Fortsatz (6) eine den Radnabeneinsatz (8) gegenüber dem Radkörper (2) freigebende Bewegung der Haltenasen (11) verhindert.

7. Abdeckscheibe mit Haltevorrichtung nach einem der vorangegangenen Ansprüche,
**dadurch gekennzeichnet, dass** einander im wesentlichen diametral gegenüberliegend zwei Arretierstifte (4) mit diesen zugeordneten Kulissenbahnen (5) vorgesehen sind.

8. Abdeckscheibe nach einem der vorangegangenen Ansprüche,
**dadurch gekennzeichnet, dass** die Abdeckscheibe (3) mit einem nur bei exaktem Andrücken überwindbaren Sicherungselement (15) versehen ist, welches bei nicht exaktem Andrücken der Abdeckscheibe verhindert, dass diese Abdeckscheibe soweit verlagert wird, dass sie vom Radkörper einfach abnehmbar ist.

9. Abdeckscheibe nach Anspruch 8,
**dadurch gekennzeichnet, dass** das Sicherungselement (15) als ein Paar von Passungselementen (13, 14) ausgebildet ist, wobei ein erstes, an der dem Radkörper zugewandten Seite der Abdeckscheibe (3) vorgesehenes und im wesentlichen senkrecht zu dieser ausgerichtetes Passungselement (13) unter enger Passung in oder auf ein letztlich am Radkörper befestigtes zweites Passungselement (14) einführbar ist.

10. Abdeckscheibe nach Anspruch 9,
**dadurch gekennzeichnet, dass** eines der Passungselemente (14) in Form eines im Querschnitt rechteckigen Stiftes und das andere Passungselement (13) als eine diesen Stift zumindest zwischen zwei einander gegenüberliegenden Seiten führende Struktur ausgebildet ist.

11. Abdeckscheibe nach einem der vorangegangenen Ansprüche,
**dadurch gekennzeichnet, dass** über dem Umfang der im wesentlichen kreisförmigen Abdeckscheibe (3) betrachtet um 180° gegeneinander versetzt zwei Paare von Passungselementen (13, 14) vorgesehen sind.

12. Abdeckscheibe nach einem der vorangegangenen Ansprüche,
**dadurch gekennzeichnet, dass** zumindest eines der Passungselemente (14) eines Passungselement-Paares derart gestaltet ist, dass nach teilweiser Verlagerung der Abdeckscheibe (3) eine stärker verengte Passung vorliegt.

## Claims

1. A cap for a wheel of a vehicle, having a retaining device which is activated by axially pressing the suitably positioned cap (3) without rotating it and consequently fixing the cap to the wheel body (2), **characterised in that** the retaining device is inactivated by further pressure, in the same direction, on the cap (3) without rotating it, so that the cap is easily removable from the wheel body (2).

2. A wheel cap with a retaining device according to claim 1, **characterised in that** the components of the retaining device are a slotted guide (5) and a locking pin (4) guided therein when the cap (3) is fitted, wherein one of these components is associated with the wheel body (2) and the other with the wheel cap (3),
and **in that** when the cap is mounted on the wheel body, the free end (4a) of the locking pin (4) is so guided in the slotted guide (5) that it reaches an engagement position (5b) in the slotted guide (5) when the cap is first pressed and after further pressure on the cap (3) the free end (4a) of the locking pin (4) is moved out of the engaged position (5b) into a portion (5c) of the slotted guide through which the pin (4) can be moved out of the guide (5).

3. A wheel cap with a retaining device according to claim 1 or 2, **characterised in that** the cap (3) can be pressed against the wheel body (2) against the force of a spring.

4. A wheel cap with a retaining device according to any of the preceding claims, **characterised in that** the locking pin (4) is fastened to the cap (3), the fastening and/or the pin itself being at least slightly flexible.

5. A wheel cap with a retaining device according to any of the preceding claims, **characterised in that** the slotted guide (5) is provided in a wheel-hub insert (8) insertable into the wheel body (2).

6. A wheel cap with a retaining device according to claim 5, **characterised in that** the hub insert (8) is held in the wheel body (2) by at least slightly resilient retaining lugs (11), wherein the cap (3) when fitted has at least one continuation (6) in the form of an annular segment which prevents the retaining lugs from moving so as to release the hub insert (8) from the wheel body (2).

7. A wheel cap with a retaining device according to any of the preceding claims, **characterised in that** two substantially diametrically opposite locking pins (4) are provided with associated slotted guides (5).

8. A wheel cap according to any of the preceding claims, **characterised in that** the wheel cap (3) has a securing element (15) which can be overcome only if the cap is correctly pressed, but if the cap is pressed in the wrong way the securing element prevents the cap being displaced sufficiently to be easily removable from the wheel body.

9. A wheel cap according to claim 8, **characterised in that** the securing element (15) is a pair of fitting elements (13, 14), wherein a first fitting element (13) provided on the side of the cap (3) facing the wheel body and aligned substantially at right angles to the cap is insertable with a close fit into or on to a second fitting element (14) finally fastened to the wheel body.

10. A wheel cap according to claim 9, **characterised in that** one of the fitting elements (14) is a rectangular-section pin and the other fitting element (13) is a structure which guides the pin at least between two opposite sides.

11. A wheel cap according to any of the preceding claims, **characterised in that** two pairs of fitting elements (13, 14) are provided round the periphery of the cover cap (3), which is substantially circular, and are offset from one another by 180°.

12. A wheel cap according to any of the preceding claims, **characterised in that** at least one (14) of a pair of fitting elements is shaped so that the fit is closer after the wheel cap (3) has been partly moved.

## Revendications

1. Enjoliveur pour une roue de véhicule, comprenant un dispositif de fixation qui, par pression axiale exercée sur l'enjoliveur (3) convenablement positionné, est activé sans rotation de celui-ci en fixant ainsi l'enjoliveur sur le corps de roue (2),
**caractérisé en ce que**
le dispositif de maintien est désactivé en exerçant à nouveau une pression dans le même sens sur l'enjoliveur (3) sans faire tourner celui-ci, de sorte que cet enjoliveur peut être séparé simplement du corps de roue (2).

2. Enjoliveur avec dispositif de maintien selon la revendication 1,
**caractérisé en ce que**
- les éléments constituant le dispositif de maintien sont une piste de coulisse (5) ainsi qu'une broche d'arrêt (4) guidée dans celle-ci lors du montage de l'enjoliveur (3), un de ces éléments étant associé au corps de roue (2) et l'autre à l'enjoliveur (3),
- la broche d'arrêt (4), avec son extrémité libre (4a), est guidée dans la piste de coulisse (5), quand on monte l'enjoliveur sur le corps de roue, de manière que par une première pression l'enjoliveur parvient dans une position d'arrêt (5b) dans la piste de coulisse (5), et qu'une pression supplémentaire sur l'enjoliveur (3) fait passer l'extrémité libre (4a) de la broche d'arrêt (4) de sa position d'arrêt (5b) à une section de piste de coulisse (5c) dans laquelle la broche d'arrêt (4) peut sortir de la piste de coulisse (5).

3. Enjoliveur avec dispositif de maintien selon la revendication 1 ou 2,
**caractérisé en ce que**
l'enjoliveur (3) peut être appliqué par pression sur le corps de roue (2) contre une force élastique.

4. Enjoliveur avec dispositif de maintien selon une des revendications précédentes,
**caractérisé en ce que**
la broche d'arrêt (4) est fixée à l'enjoliveur (3), cette fixation et/ou la broche d'arrêt elle-même étant au moins faiblement flexible.

5. Enjoliveur avec dispositif de maintien selon une des revendications précédentes,
**caractérisé en ce que**
la piste de coulisse (5) est prévue dans un insert de moyeu de roue (8) qui peut être inséré dans le corps de roue (2).

6. Enjoliveur avec dispositif de maintien selon la revendication 5,
**caractérisé en ce que**
l'insert de moyeu de roue (8) est maintenu dans le corps de roue (2) par des ergots de maintien (11) au moins faiblement élastiques, l'enjoliveur (3) monté avec au moins un appendice en forme de segment annulaire (6) empêchant que les ergots de maintien (11) se déplacent pour libérer l'insert de moyeu de roue (8) par rapport au corps de roue (2).

7. Enjoliveur avec dispositif de maintien selon une des revendications précédentes,
**caractérisé en ce qu'**
il est prévu deux broches d'arrêt (4), pour l'essentiel diamétralement opposées l'une à l'autre, avec les pistes de coulisse (5) qui leur sont associées.

8. Enjoliveur selon une des revendications précédentes,
**caractérisé en ce que**
l'enjoliveur (3) est équipé d'un élément de sécurité (15) qui ne peut être surmonté que par une pression exacte et qui, dans le cas contraire, empêche que l'enjoliveur soit suffisamment décalé pour qu'il puisse être retiré simplement du corps de roue.

9. Enjoliveur selon la revendication 8,
**caractérisé en ce que**
l'élément de sécurité (15) est constitué par une paire d'éléments d'ajustage (13, 14) dont le premier (13), prévu sur le côté de l'enjoliveur (3) en regard du corps de roue en étant essentiellement perpendiculaire à l'enjoliveur, peut être introduit avec un ajustage serré dans ou sur le second élément d'ajustage (14) fixé finalement au corps de roue.

10. Enjoliveur selon la revendication 9,
**caractérisé en ce qu'**
un des éléments d'ajustage (14) a la forme d'une broche de section rectangulaire, tandis que l'autre élément d'ajustage (13) est constitué sous la forme d'une structure guidant cette broche au moins entre deux côtés opposés.

11. Enjoliveur selon une des revendications précédentes,
**caractérisé en ce que**
sur la périphérie essentiellement circulaire de l'enjoliveur (3) sont prévues deux paires d'éléments d'ajustage (13, 14) décalées entre elles de 180°.

12. Enjoliveur selon une des revendications précédentes,
**caractérisé en ce qu'**
au moins un des éléments d'ajustage (14) d'une paire d'éléments est constitué de manière qu'un déplacement partiel de l'enjoliveur (3) entraîne un ajustage plus étroit.
